(19) Europäisches Patentamt

European Patent Office

Office européen des brevets

(11) EP 0 823 739 A2

## (12) DEMANDE DE BREVET EUROPEEN

(43) Date de publication:
**11.02.1998 Bulletin 1998/07**

(51) Int Cl.⁶: $H01M\ 2/02$

(21) Numéro de dépôt: **97401842.6**

(22) Date de dépôt: **31.07.1997**

(84) Etats contractants désignés:
**AT BE CH DE DK ES FI FR GB GR IE IT LI LU MC NL PT SE**

(30) Priorité: **05.08.1996 FR 9609868**

(71) Demandeur: **SAFT**
**F-93230 Romainville (FR)**

(72) Inventeur: **Verhoog, Roelof**
**33200 Bordeaux (FR)**

(74) Mandataire: **Laroche, Danièle et al**
**c/o ALCATEL ALSTHOM,**
**Département de Propriété Industrielle,**
**30, avenue Kléber**
**75116 Paris (FR)**

### (54) Conteneur pour batterie monobloc étanche

(57)    La présente invention a pour objet une batterie monobloc étanche dont le conteneur se compose d'un matériau comprenant un mélange d'au moins

- une matrice à base de polypropylène, et
- un alliage d'un polyamide et d'un polypropylène.

Le rapport pondéral de la matrice à l'alliage est compris entre 0,5 et 6. L'alliage forme dans la matrice des inclusions arborescentes de forme allongée telles que en moyenne la plus grande dimension d'un segment des arborescences soit au moins égale à vingt fois la plus petite dimension du segment.

EP 0 823 739 A2

## Description

La présente invention concerne une batterie monobloc étanche. Une batterie d'accumulateurs de type monobloc possède un conteneur unique habituellement de forme prismatique comportant des alvéoles, séparées par des parois, dans lesquelles sont placés les éléments d'accumulateur. Ces batteries ont généralement des capacités comprises entre 10 et 250Ah.

Les batteries d'accumulateurs de type "étanche" à soupape ne permettent pas d'échanges gazeux avec le milieu ambiant en fonctionnement normal. Jusqu'à présent la plupart des batteries de type "étanche" étaient principalement destinées à être incorporées dans des appareils portables. Elles sont donc de petite taille et de capacité limitée ($\leq$ 10Ah). Afin de protéger l'utilisateur contre une éventuelle surpression, leur forme est de préférence cylindrique et leur conteneur est habituellement métallique. Un tel conteneur est coûteux et pesant, ce qui limite l'énergie massique de la batterie.

Récemment le besoin de batteries de grande capacité et de plus forte énergie massique s'est fait sentir. Les batteries qui possèdent les meilleures caractéristiques sont de forme prismatique et possèdent un conteneur en matérau polymère. La batterie de type "monobloc" présentent un grand intérêt de ce point de vue. Il s'est posé alors le problème de leur étanchéité notamment en présence d'une surpression interne modérée. Une condition principale de l'étanchéité de la batterie est l'imperméabilité intrinsèque aux liquides et aux gaz du matériau constituant le conteneur.

En effet la perte d'une partie de l'électrolyte ou bien de l'eau ou du solvant organique constituant la base de l'électrolyte entraîne une baisse inévitable des performances de la batterie. Par exemple si le matériau employé pour réaliser le conteneur n'est pas imperméable à la fois à l'oxygène et à l'hydrogène cela revient à une perte d'eau, donc un raccourcissement de la vie de la batterie; mais si le matériau n'est perméable qu'à l'un de ces deux gaz, le profil de fonctionnement de la batterie s'en trouve déséquilibré.

Notamment utilisées dans les applications ferroviaires, les premières batteries de ce type avaient un conteneur en polypropylène (PP). La perméabilité au gaz de ce type de batteries avait été jugé insatisfaisant.

Le conteneur des batteries destinées plus particulièrement aux applications aviation, a été réalisé en polyamide 11 (PA 11) de formule chimique $(-NH-(CH_2)_{10}-CO-)_n$ obtenu par polycondensation de l'acide amino-undécanoïque. Mais si son imperméabilité aux gaz est meilleure que celle du PP, le PA est connu pour absorber les liquides, notamment l'eau ou le glycol. De plus ce matériau est coûteux et pose un problème de ressource du fait de son origine végétale (graine de ricin).

Dans le cas où la batterie est pourvue d'un système de refroidissement comportant la circulation d'un liquide caloporteur le long des parois de la batterie, l'absorption d'humidité par le matériau du bac peut entraîner une perte d'isolation électrique entre le faisceau électrochimique et le liquide de refroidissement. Si l'isolement électrique atteint des valeurs faibles, l'utilisateur de la batterie peut être mis en danger.

La présente invention a pour but de proposer une batterie monobloc étanche dont l'imperméabilité simultanée aux liquides et aux gaz est améliorée. Plus particulièrement l'invention propose une batterie monobloc présentant une perméabilité aux gaz inférieure à 10% de la perméabilité aux gaz du PP.

L'objet de la présente invention est une batterie monobloc étanche dont le conteneur se compose d'au moins deux pièces en matériau thermoplastique, caractérisé en ce que ledit matériau comprend un mélange comportant au moins

- une matrice qui est choisie parmi un polypropylène, un copolymère de propylène et d'éthylène, et un polypropylène greffé par un radical éthylène, et
- un alliage de polymères comprenant
- une proportion égale ou supérieure à 50% en poids de l'alliage d'un premier polymère qui est un polyamide choisi parmi un polyamide 6, un polyamide 6-6, et un copolymère de polyamide 6 et de polyamide 6-6, et
- une proportion inférieure ou égale à 50% en poids de l'alliage d'un deuxième polymère choisi parmi un polypropylène, un copolymère de propylène et d'éthylène, et un polypropylène greffé par un radical éthylène, et
- un compatibilisant,

le rapport pondéral de ladite matrice audit alliage étant compris entre 0,5 et 6, et ledit alliage formant dans ladite matrice des inclusions arborescentes de forme allongée telles que en moyenne la plus grande dimension d'un segment desdites arborescences soit au moins égale à vingt fois la plus petite dimension dudit segment.

Le matériau du conteneur comprend un alliage de polymères qui se définit comme le mélange entre au moins deux polymères non compatibles entre eux, dans lequel est ajouté un agent compatibilisant afin de conférer au mélange l'homogénéité requise. L'agent compatibilisant assure la liaison entre le polyamide et le polypropylène, généralement grâce aux groupes propylène et amide qu'il porte.

La matrice est choisi parmi un polypropylène $-(-CH_2-CH(CH_3)-)_n-$, un copolymère alterné ou séquencé de polyéthylène et de polypropylène, et un polymère à chaîne principale polypropylène sur laquelle sont greffé des radicaux éthylène.

2

De préférence, la proportion de ladite matrice est comprise entre 40% et 85% en poids dudit mélange.

L'alliage comprend un premier polymère contenant du polypropylène et un deuxième polymère qui est un polyamide choisi parmi un polyamide 6, un polyamide 6-6, et un copolymère alterné ou séquencé de polyamide, ces polyamides étant éventuellement greffés.

Le polyamide 6 ou polyaminocaprolactame a pour formule chimique $(-NH-(CH_2)_5-CO-)_n$. Il est obtenu par réaction de l'acide caproïque et de la diamine d'hexaméthylène. C'est un matériau qui, utilisé seul, présente des variations dimensionnelles importantes en présence d'humidité.

Le polyamide 6-6 a pour formule chimique $(-NH-(CH_2)_6NH-CO-(CH_2)_4-CO-)_n$. Il est obtenu par réaction de l'acide adipique et de la diamine d'hexaméthylène.

De préférence, la proportion dudit alliage est comprise entre 15% et 60% en poids dudit mélange.

Le rapport du poids M de la matrice au poids A de l'alliage est tel que: $0,5 \leq \frac{M}{A} \leq 6$.

Observé au microscope électronique à transmission, ce mélange se présente comme une dispersion de l'alliage dans la matrice. L'alliage est sous la forme d'inclusions allongée en forme de lentilles ou de bâtonnets qui peuvent être ramifiés, chaque bâtonnet représentant un segment de l'arborescence. La longueur L doit être très supérieure à l'épaisseur e des bâtonnets et il faut que la moyenne des mesures conduisent à un rapport $\frac{L}{e} \geq 20$. Ces inclusions forment un réseau discontinu de l'alliage au sein de la matrice.

De préférence, ladite plus grande dimension desdites inclusions est comprise entre 5μm et 50μm (5μm ≤ L ≤ 50μm), et ladite plus petite dimension est comprise entre 0,1μm et 2,5μm (0,1μm ≤ e ≤ 2,5μm).

La proportion dudit compatibilisant est au plus égale à 10% en poids dudit alliage. La présence de l'agent compatibilisant est indispensable à la réalisation de l'alliage, mais sa proportion C doit rester faible relativement à la composition de l'alliage: 0% < C ≤ 10%.

Selon un mode de réalisation, ladite matrice est un copolymère choisi parmi les copolymères alternés et les copolymères séquencés de propylène et d'éthylène.

Selon un autre mode de réalisation, ladite matrice est un polypropylène greffé par un radical éthylène, le taux de greffage étant compris entre 5% et 16% en poids de ladite matrice.

De préférence ladite matrice est un polypropylène greffé par un radical éthylène, le taux de greffage étant de 8%, et ledit alliage comprenant un polyamide 6.

Selon une première forme d'exécution préférentielle, la proportion de ladite matrice est de 80% en poids dudit mélange.

Selon une deuxième forme d'exécution préférentielle, la proportion de ladite matrice est de 60% en poids dudit mélange.

Le matériau peut en outre contenir des additifs électriquement non-conducteurs destinés à améliorer ses propriétés mécaniques. Selon un mode particulier de réalisation, ledit matériau comprend en outre un additif choisi parmi des fibres de verres et une charge minérale, comme de la silice, de l'argile, la proportion de ladite matrice étant au moins égale à 30% en poids dudit matériau. Il est indispensable que le polypropylène soit le polymère majoritairement présent dans le matériau afin d'assurer une continuité de matière et de garantir l'étanchéité aux liquides.

Bien entendu l'étanchéité du conteneur d'une batterie dépend également de la qualité d'étanchéité des liaisons entre les différentes pièces qui le composent. Pour les batteries de l'invention, les liaisons entre les pièces du conteneur sont réalisées par thermosoudure. La thermosoudure peut être réalisée par contact ou par rayonnement thermique. Les autres procédés de liaisons sont moins fiables, comme le collage, ou inadaptés à une pièce de forme complexe, comme la soudure par ultra-sons.

De préférence, ledit lesdites pièces du conteneur sont thermosoudées par contact. Les pièces composant le conteneur sont réalisées par injection sous pression du matériau à l'état fondu. Le conteneur a généralement une épaisseur de paroi latérale comprise entre 1,5mm et 3mm. Les pièces obtenues sont ensuite thermosoudées par contact. Cette technique consiste en un préchauffage par contact direct jusqu'au ramollissement avec un outil chauffant des deux surfaces à souder, et en leur serrage immédiat après recul de l'outil chauffant. Le transfert de chaleur entre l'outil et la pièce s'effectue par conduction donc en profondeur. Le temps entre le chauffage et l'application de la pression d'assemblage doit être le plus court possible pour éviter le refroidissement de la surface du polymère fondu. L'outil chauffant est en général à résistances électriques (miroir chauffant) et il est équipé d'un régulateur de température.

La combinaison des deux caractéristiques d'imperméabilité intrinsèque du matériau et d'aptitude à la thermosoudure par contact est le meilleur moyen de parvenir à une étanchéité satisfaisante du conteneur, gage d'une longue durée d'utilisation de la batterie.

Selon une variante, ladite batterie comporte un dispositif de refroidissement par circulation d'un liquide caloporteur le long des parois dudit conteneur. Ce dispositif peut être par exemple celui décrit dans la demande de brevet français n°2 697 678.

Selon une première forme d'exécution, la batterie selon l'invention est une batterie monobloc à électrolyte alcalin comportant de cinq à cinquante alvéoles contenant des éléments d'accumulateurs nickel-hydrure métalliques.

Selon une deuxième forme d'exécution, la batterie selon l'invention est une batterie monobloc à électrolyte alcalin comportant de cinq à cinquante alvéoles contenant des éléments d'accumulateurs nickel-cadmium.

Le matériau selon la présente invention a comme avantage d'être chimiquement inerte vis à vis des électrolytes alcalins utilisés qui contient principalement au moins un hydroxyde alcalin comme la potasse KOH, la soude NaOH, ou la lithine LiOH, mais également d'autres additifs comme par exemple des tensioactifs.

Selon une troisième forme d'exécution, la batterie selon l'invention est une batterie monobloc à électrolyte organique comportant des éléments d'accumulateurs au lithium. Le matériau selon l'invention est également résistant aux solvants organiques constituant la base des électrolytes non aqueux.

Le conteneur selon l'invention a aussi l'avantage d'être un bon isolant électrique, d'avoir une bonne stabilité dimensionnelle en présence d'humidité, de résister aux chocs et aux températures pouvant aller jusqu'à 100°C. En outre ce matériau est léger (densité $\leq$ 1,03g/cm$^3$), facile à mettre en forme industriellement, en particulier par injection, et son coût est modéré.

Une telle batterie est particulièrement adaptée à l'utilisation comme source d'énergie d'un véhicule automobile. Le matériau du conteneur a l'avantage d'être chimiquement insensible aux différents fluides présents, comme par exemple le liquide du circuit de freinage.

L'invention sera mieux comprise et d'autres avantages et particularités apparaîtront à la lecture de la description qui va suivre, donnée à titre non limitatif, en référence au dessin annexé sur lequel:

- La figure 1 représente une batterie d'accumulateurs monobloc selon la présente invention contenant cinq alvéoles,

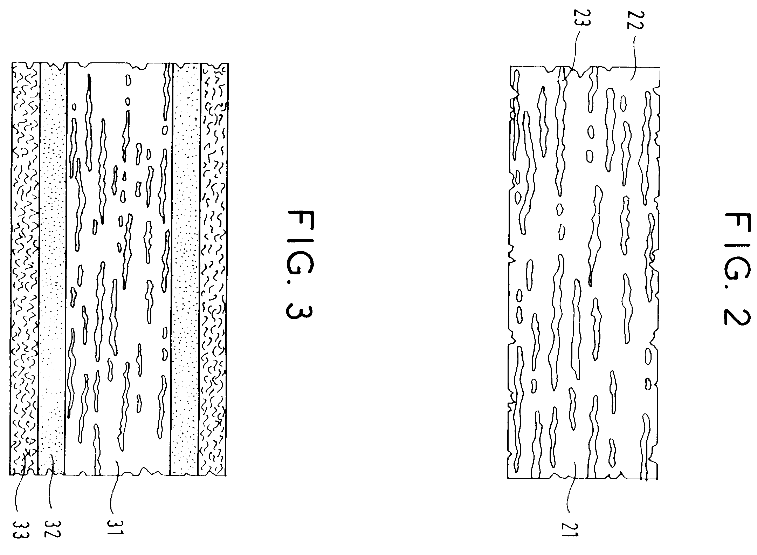

- la figure 2 est une coupe tranversale de la paroi du conteneur d'une batterie selon la présente invention montrant par microscopie électronique la structure du matériau,
- la figure 3 est analogue à la figure 2 pour un matériau ne faisant pas partie de l'invention.

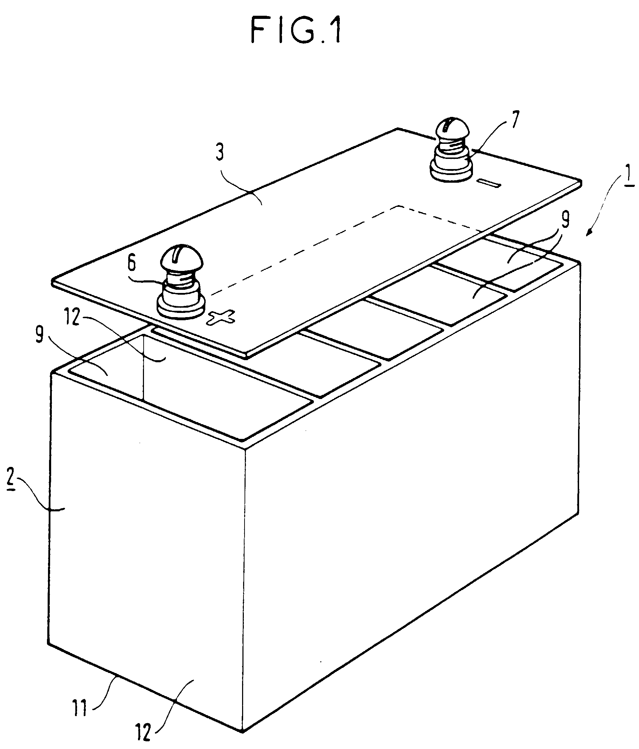

La figure 1 représente une batterie d'accumulateurs monobloc de capacité 120Ah et de tension 6V selon la présente invention. Elle comporte un conteneur 1 composé d'un bac 2, d'un couvercle 3. Le couvercle 3 porte les bornes positive 6 et négative 7. Le bac comporte des parois longitudinales 5, un fond 11 et des parois latérales 12 d'épaisseur 2mm environ. Les éléments d'accumulateurs sont logés dans cinq alvéoles 9 limitées par les parois latérales 12.

Les pièces 2 et 3 composant le conteneur 1 sont réalisées par injection sous pression du matériau à l'état fondu à une température comprise entre 240°C et 290°C. Ces pièces sont ensuite assemblées par thermosoudure par contact direct. Elles sont amenées au contact de la surface de l'outil chauffant. L'outil est retiré et les zones fondues sont pressées l'une contre l'autre.

Les batteries monobloc selon l'invention sont toujours munies d'un bridage de maintien lors de leur utilisation. Dans le cas présent, la tenue mécanique du matériau n'est donc pas un paramètre critique.

On réalise cinq conteneurs I à V de batterie monobloc. Le conteneur I est en polypropylène. Les conteneurs II à V sont réalisés dans un matériau comprenant un mélange d'une matrice et d'un alliage dans des proportions variables précisées dans le tableau ci-dessous.

La matrice est en polypropylène greffé par 8% en poids d'éthylène commercialisé sous la référence "PPT 1052" par la société HOECHST. L'alliage comprend du polypropylène et du polyamide 6; il est commercialisé sous la référence "RS 6000" par la société ATOCHEM. A titre indicatif, il comprend environ 60 % de polyamide 6, 37 % de polypropylène et 3 % de compatibilisant.

La perméabilité aux gaz est évaluée par une mesure de perméabilité de l'hydrogène réalisée à l'aide d'un hydrotest. La perméabilité à l'hydrogène est mesurée sous une pression relative de 1 bar. Le test est effectué sur un conteneur fermé comprenant un bac et un couvercle thermosoudé. Le conteneur est rempli d'hydrogène et le vide est fait à l'extérieur. Un spectromètre permet de mesurer la quantité d'hydrogène qui s'échappe du conteneur.

La perméabilité aux liquides est estimée par une mesure de l'isolement électrique sur un bac rempli d'électrolyte (solution aqueuse de KOH 8,7N) baignant dans un mélange équivolumique d'eau et d'éthylène-glycol, habituellement utilisé comme liquide de refroidissement. Le test est effectué par un diélectrimètre dont l'une des électrodes plonge dans l'électrolyte alors que l'autre est placé dans le liquide de refroidissement.

Le module de flexion est mesuré sur une éprouvette à l'aide d'une machine de traction selon une méthodes connue. Les résultats obtenus sont rassemblés dans le tableau ci-dessous.

TABLEAU

| réf. | composition | | | perméabilité à l'H$_2$ | isolation | module de flexion |
|---|---|---|---|---|---|---|
| | matrice | alliage | $\frac{M}{A}$ | cm$^3$/m$^2$.24h | m$\Omega$ | MPa |
| | % | % | | | | |
| I | 100 | 0 | - | 200 000 | $\infty$ après 120h | 1 050 |
| II | 80 | 20 | 4 | 17 600 | $\infty$ après 340h | 1 054 |

TABLEAU   (suite)

| réf. | composition | | | perméabilité à l'H$_2$ | isolation | module de flexion |
|---|---|---|---|---|---|---|
| | matrice | alliage | $\frac{M}{A}$ | cm$^3$/m$^2$.24h | m$\Omega$ | MPa |
| | % | % | | | | |
| III | 70 | 30 | 2,33 | 17 600 | $\infty$ après 120h | 1 065 |
| IV | 60 | 40 | 1,50 | 13 600 | $\infty$ après 120h | 1 060 |
| V | 30 | 70 | 0,43 | 4 800 | 460 après 120h | 1 350 |

L'observation en coupe d'échantillon des matériaux des conteneurs II à IV montre une stucture homogène 21 constituée d'une matrice 22 contenant des inclusions 23 de forme plus ou moins allongées selon leur axe par rapport au plan de coupe.

Par contre la même observation effectuée sur le matériau du conteneur V montre trois zones distinctes: une partie centrale 31 de forte porosité qui correspond à une concentration élevée en polyamide, une partie 32 de part et d'autre de la partie centrale 31 d'épaisseur environ 100µm plus dense, et enfin une partie externe 33 de structure fibreuse très poreuse et d'épaisseur environ 100µm.

Bien entendu la présente invention n'est pas limitée aux modes de réalisation décrits, mais elle est susceptible de nombreuses variantes accessibles à l'homme de l'art sans que l'on ne s'écarte de l'esprit de l'invention. En particulier, on pourra sans sortir du cadre de l'invention faire varier les compositions dans les fourchettes indiquées.

**Revendications**

1. Batterie monobloc étanche dont le conteneur se compose d'au moins deux pièces en matériau thermoplastique, caractérisé en ce que ledit matériau comprend un mélange comportant au moins

   - une matrice qui est choisie parmi un polypropylène, un copolymère de propylène et d'éthylène, et un polypropylène greffé par un radical éthylène, et
   - un alliage de polymères comprenant une proportion égale ou supérieure à 50% en poids de l'alliage d'un premier polymère qui est un polyamide choisi parmi un polyamide 6, un polyamide 6-6, et un copolymère de polyamide 6 et de polyamide 6-6, et une proportion inférieure ou égale à 50% en poids de l'alliage d'un deuxième polymère choisi parmi un polypropylène, un copolymère de propylène et d'éthylène, et un polypropylène greffé par un radical éthylène, et un compatibilisant,

   le rapport pondéral de ladite matrice audit alliage étant compris entre 0,5 et 6, et ledit alliage formant dans ladite matrice des inclusions arborescentes de forme allongée telles que en moyenne la plus grande dimension d'un segment desdites arborescences soit au moins égale à vingt fois la plus petite dimension dudit segment.

2. Batterie selon la revendication 1, dans laquelle la proportion de ladite matrice est comprise entre 40% et 85% en poids dudit mélange.

3. Batterie selon l'une des revendications 1 et 2, dans laquelle la proportion dudit alliage est comprise entre 15% et 60% en poids dudit mélange.

4. Batterie selon l'une des revendications précédentes, dans laquelle ladite plus grande dimension desdites inclusions est comprise entre 5µm et 50µm, et ladite plus petite dimension est comprise entre 0,1µm et 2,5µm.

5. Batterie selon l'une des revendications précédentes, dans laquelle la proportion dudit agent compatibilisant est au plus égale à 10% en poids dudit alliage.

6. Batterie selon l'une des revendications précédentes, dans laquelle ladite matrice est un copolymère choisi parmi les copolymères alternés et les copolymères séquencés de propylène et d'éthylène.

7. Batterie selon l'une des revendications 1 à 5, dans laquelle ladite matrice est un polypropylène greffé par un radical éthylène, le taux de greffage étant compris entre 5% et 16% en poids de ladite matrice.

8.  Batterie selon la revendication 7, dans laquelle ladite matrice est un polypropylène greffé par un radical éthylène, le taux de greffage étant de 8%, et ledit alliage comprend un polyamide 6.

9.  Batterie selon la revendication 8, dans laquelle la proportion de ladite matrice est de 80% en poids dudit mélange.

10. Batterie selon la revendication 8, dans laquelle la proportion de ladite matrice est de 60% en poids dudit mélange.

11. Batterie selon l'une des revendications précédentes, dans laquelle ledit matériau comprend en outre un additif choisi parmi des fibres de verres et une charge minérale, la proportion de ladite matrice étant au moins égale à 30% en poids dudit matériau.

12. Batterie selon l'une des revendications précédentes, dans laquelle ledit lesdites pièces du conteneur sont thermosoudées par contact.

13. Batterie selon l'une des revendications précédentes, comportant un dispositif de refroidissement par circulation d'un liquide caloporteur le long des parois dudit conteneur.

14. Batterie selon l'une des revendications précédentes, comportant de cinq à cinquante alvéoles contenant des éléments d'accumulateurs nickel-hydrure métalliques.

15. Batterie selon l'une des revendications 1 à 13, comportant de cinq à cinquante alvéoles contenant des éléments d'accumulateurs nickel-cadmium.

16. Batterie selon l'une des revendications 1 à 13, comportant des éléments d'accumulateurs au lithium.

# FIG.1

# FIG. 2

# FIG. 3